# EUROPEAN PATENT APPLICATION

(11) **EP 2 955 628 A1**
(43) Date of publication of application: **16.12.2015**
(21) Application number: 15171979.6
(22) Date of filing: 12.06.2015
(51) Int. Cl.: G06F 9/44

(54) **METHOD AND DEVICE FOR DISPLAYING APPLICATION EXECUTION SCREEN IN ELECTRONIC DEVICE**

(30) Priority: 12.06.2014 KR 20140071434
(71) Applicant: Samsung Electronics Co., Ltd, Gyeonggi-do 443-742 (KR)
(72) Inventor: LEE, Jaewook, 443-742 Gyeonggi-do (KR); KYUNG, Seunghyun, 443-742 Gyeonggi-do (KR)
(74) Representative: Jenkins, Richard Gavin

(57) **Abstract**

A method and a device for controlling a search result in an electronic device are provided. The method includes displaying a first application screen, transmitting a request for executing a second application to a second application control module through a first application control module when detecting the request for executing the second application, receiving a second application screen from the second application control module, reconfiguring the received second application screen to display the received second application screen together with the first application screen and displaying the reconfigured first application screen and second application screen. Therefore, according to the present disclosure, it is possible to display a plurality of application screens without screen change.

## Description

### TECHNICAL FIELD

The present disclosure relates to a method and device for displaying at least one application execution screen in an electronic device.

### BACKGROUND

Currently, electronic devices have reached a convergence stage of encompassing functions of other electronic devices without being confined to their own unique functions. For example, portable terminals provide not only their own unique function of transmitting/receiving a telephone call but also a large number of functions, such as an Internet search function, a video playback function, a photography function, a scheduling function, an alarm function, and the like.

The electronic devices may provide a capability of executing a large number of functions at one time. For example, the electronic devices, while executing a search application, may change a screen to execute a video playback application.

The above information is presented as background information only to assist with an understanding of the present disclosure. No determination has been made, and no assertion is made, as to whether any of the above might be applicable as prior art with regard to the present disclosure.

### SUMMARY

The electronic devices, when detecting a user input on an application execution screen, may display another application execution screen switched in response to the detected user input. In addition, when consecutively detecting user inputs, the electronic devices may make a change into screens corresponding to the user inputs several times. However, every time the user inputs are detectd, the electronic devices have to change the screens in response to the detected user inputs, thereby causing inconvenience.

Aspects of the present disclosure are to address at least the above-mentioned problems and/or disadvantages and to provide at least the advantages described below. Accordingly, an aspect of the present disclosure is to provide a method and device that may display application execution screens corresponding to user inputs in partial regions of one screen without having to successively change screens.

Another aspect of the present disclosure is to provide a method and device that may display applications using a multi-layout when the applications are included in a search result list corresponding to a search term.

In accordance with an aspect of the present disclosure, a method of displaying an application screen in an electronic device is provided. The method includes displaying a first application screen, transmitting a request for executing a second application to a second application control module through a first application control module when detecting the request for executing the second application, receiving a second application screen from the second application control module, reconfiguring the received second application screen to display the second application screen together with the first application screen and displaying the reconfigured first and second application screens.

In accordance with another aspect of the present disclosure, a method of displaying an application screen in an electronic device is provided. The method includes displaying a first application screen and displaying a search result list corresponding to a search term when input of the search term is detected on the first application screen, wherein the displaying of the search result list corresponding to the search term includes transmitting a request for executing a second application to a second application control module through a first application control module when the execution request occurs while the search result list is displayed, receiving a second application screen from the second application, and reconfiguring the search result list such that the received second application screen is displayed together with the first application screen and displaying the reconfigured first application screen and second application screen.

In accordance with another aspect of the present disclosure, a device for displaying an application screen in an electronic device is provided. The device includes a display configured to display a first application screen and a second application screen and a processor configured to control to transmit a request for executing a second application to a second application control module through a first application control module when the request for executing the second application is detected on the first application screen, and to control to display the first and second application screens when receiving the second application screen in response to the execution request.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a network environment including an electronic device according to various embodiments of the present disclosure;
FIG. 2 is a block diagram of an application control module of the electronic device according to various embodiments of the present disclosure;
FIG. 3 is a flowchart illustrating a method of displaying screens as a plurality of applications are executed according to various embodiments of the present disclosure;
FIGS. 4A, 4B, and 4C are views illustrating a plurality of application execution screens according to various embodiments of the present disclosure;
FIG. 5 is a flowchart illustrating a method of displaying a search result list according to various embodiments of the present disclosure;
FIG. 6 is a flowchart illustrating a method of configuring a search result list according to various embodiments of the present disclosure;
FIGS. 7A and 7B illustrate examples of displaying a search result list according to various embodiments of the present disclosure;
FIG. 8 is a diagram illustrating a configuration for processing an event occurring in a search result list according to various embodiments of the present disclosure; and
FIG. 9 is a block diagram of an electronic device according to various embodiments of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein may be made without departing from the scope and spirit of the present disclosure. In addition, descriptions of well-known functions and constructions may be omitted for clarity and conciseness.

The terms and words used in the following description and claims are not limited to the bibliographical meanings, but are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The term "include" or "may include" which may be used in describing various embodiments of the present disclosure refers to the existence of a corresponding disclosed function, operation or component which may be used in various embodiments of the present disclosure and does not limit one or more additional functions, operations, or components. In various embodiments of the present disclosure, the terms such as "include" or "have" may be construed to denote a certain characteristic, number, operation, constituent element, component or a combination thereof, but may not be construed to exclude the existence of or a possibility of addition of one or more other characteristics, numbers, operations, constituent elements, components or combinations thereof.

In various embodiments of the present disclosure, the expression "or" or "at least one of A or/and B" includes any or all of combinations of words listed together. For example, the expression "A or B" or "at least A or/and B" may include A, may include B, or may include both A and B.

The expression "1", "2", "first", or "second" used in various embodiments of the present disclosure may modify various components of the various embodiments but does not limit the corresponding components. For example, the above expressions do not limit the sequence and/or importance of the components. The expressions may be used for distinguishing one component from other components. For example, a first user device and a second user device indicate different user devices although both of them are user devices. For example, without departing from the scope of the present disclosure, a first structural element may be referred to as a second structural element. Similarly, the second structural element also may be referred to as the first structural element.

When it is stated that a component is "coupled to" or "connected to" another component, the component may be directly coupled or connected to another component or a new component may exist between the component and another component. In contrast, when it is stated that a component is "directly coupled to" or "directly connected to" another component, a new component does not exist between the component and another component.

The terms used in describing various embodiments of the present disclosure are only examples for describing a specific embodiment but do not limit the various embodiments of the present disclosure.

Unless defined differently, all terms used herein, which include technical terminologies or scientific terminologies, have the same meaning as that understood by a person skilled in the art to which the present disclosure belongs. Such terms as those defined in a generally used dictionary are to be interpreted to have the meanings equal to the contextual meanings in the relevant field of art, and are not to be interpreted to have ideal or excessively formal meanings unless clearly defined in the present description.

An electronic device according to various embodiments of the present disclosure may be a device including a projection function. For example, the electronic device may be one or a combination of a smart phone, a tablet Personal Computer (PC), a mobile phone, a video phone, an e-book reader, a desktop PC, a laptop PC, a netbook computer, a Personal Digital Assistant (PDA), a camera, a wearable device (e.g., a Head-Mounted-Device (HMD) such as electronic glasses, electronic clothes, and electronic bracelet, an electronic necklace, an electronic appcessary, an electronic tattoo, and a smart watch.

According to various embodiments of the present disclosure, the electronic device may be a smart home appliance having a projection function. The smart home appliance may include at least one of a TeleVision (TV), a Digital Video Disc (DVD) player, an audio player, an air conditioner, a cleaner, an oven, a microwave oven, a washing machine, an air cleaner, a set-top box, a TV box (e.g., Samsung HomeSync^{™}, Apple TV^{™}, or Google TV^{™}), game consoles, an electronic dictionary, an electronic key, a camcorder, and an electronic frame.

According to various embodiments of the present disclosure, the electronic device may include at least one of various types of medical devices (e.g., Magnetic Resonance Angiography (MRA), Magnetic Resonance Imaging (MRI), Computed Tomography (CT), a scanner, an ultrasonic device and the like), a navigation device, a Global Positioning System (GPS) receiver, an Event Data Recorder (EDR), a Flight Data Recorder (FDR), a vehicle infotainment device, electronic equipment for a ship (e.g., a navigation device for ship, a gyro compass and the like), avionics, a security device, a head unit for a vehicle, an industrial or home robot, an Automatic Teller Machine (ATM) of financial institutions, and a Point Of Sale (POS) device of shops.

According to various embodiments of the present disclosure, the electronic device may include at least one of furniture or a part of a building/structure, an electronic board, an electronic signature receiving device, a projector, and various types of measuring devices (e.g., a water meter, an electricity meter, a gas meter, a radio wave meter and the like) including a projection function. The electronic device according to various embodiments of the present disclosure may be one or a combination of the above described various devices. Further, the electronic device according to various embodiments of the present disclosure may be a flexible device. It is apparent to those skilled in the art that the electronic device according to various embodiments of the present disclosure is not limited to the above described devices.

Hereinafter, an electronic device according to various embodiments of the present disclosure will be described with reference to the accompanying drawings. The term "user" used in various embodiments may refer to a person who uses an electronic device or a device (e.g., an artificial intelligence electronic device) which uses an electronic device.

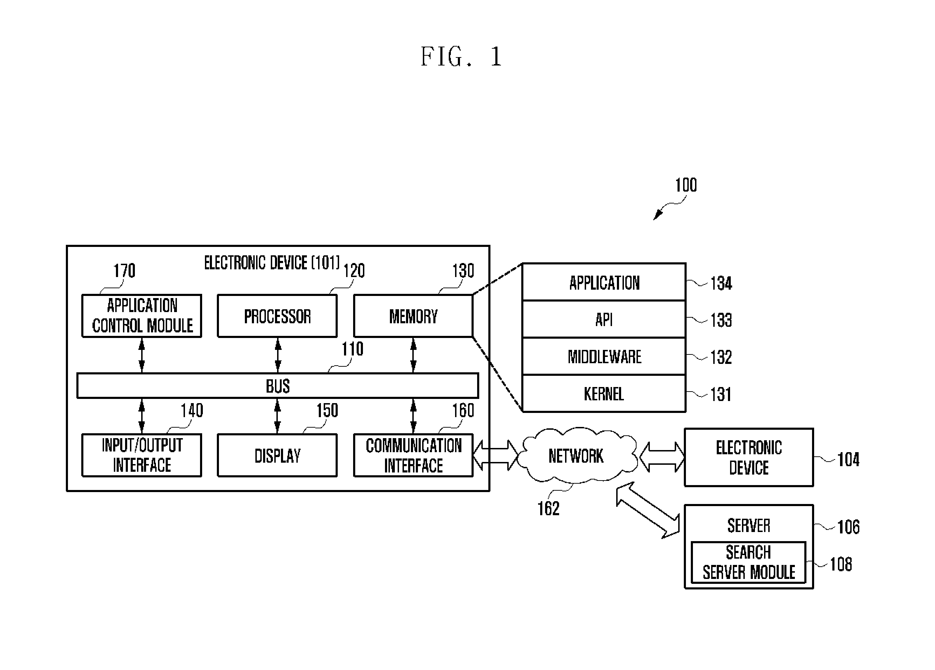

FIG. 1 illustrates a network environment including an electronic device according to various embodiments of the present disclosure.

Referring to FIG. 1, a network environment 100 may include an electronic device 101. The electronic device 101 includes a bus 110, a processor 120, a memory 130, an input/output interface 140, a display 150, a communication interface 160, and an application control module 170, but is not limited thereto.

The bus 110 may be a circuit connecting the above described components and transmitting communication (e.g., a control message) between the above described components.

The processor 120 receives commands from other components (e.g., the memory 130, the input/output interface 140, the display 150, the communication interface 160, or the module 170) through the bus 110, analyzes the received commands, and executes calculation or data processing according to the analyzed commands.

The memory 130 stores commands or data received from the processor 120 or other components (e.g., the input/output interface 140, the display 150, the communication interface 160, or the application control module 170) or generated by the processor 120 or other components. The memory 130 may include programming modules, for example, a kernel 131, middleware 132, an Application Programming Interface (API) 133, and an application 134. Each of the aforementioned programming modules may be implemented by software, firmware, hardware, or a combination of two or more thereof.

The kernel 131 controls or manages system resources (e.g., the bus 110, the processor 120, or the memory 130) used for executing an operation or function implemented by the remaining other programming modules, for example, the middleware 132, the API 133, or the application 134. Further, the kernel 131 provides an interface for accessing individual components of the electronic device 101 from the middleware 132, the API 133, or the application 134 to control or manage the components.

The middleware 132 performs a relay function of allowing the API 133 or the application 134 to communicate with the kernel 131 to exchange data. Further, in operation requests received from the application 134, the middleware 132 performs a control for the operation requests (e.g., scheduling or load balancing) by using a method of assigning a priority, by which system resources (e.g., the bus 110, the processor 120, the memory 130 and the like) of the electronic device 101 may be used, to the application 134.

The API 133 is an interface by which the application 134 may control a function provided by the kernel 131 or the middleware 132 and includes, for example, at least one interface or function (e.g., command) for a file control, a window control, image processing, or a character control.

According to various embodiments of the present disclosure, the application 134 may include a Short Message Service (SMS)/Multimedia Messaging Service (MMS) application, an email application, a calendar application, an alarm application, a health care application (e.g., application measuring quantity of exercise or blood sugar) or an environment information application (e.g., application providing information on barometric pressure, humidity or temperature). Additionally or alternatively, the application 134 may be an application related to an information exchange between the electronic device 101 and an external electronic device (e.g., the external electronic device 104). The application related to the information exchange may include, for example, a notification relay application for transferring particular information to the external electronic device or a device management application for managing the external electronic device.

For example, the notification relay application may include a function of transmitting notification information generated by another application (e.g., an SMS/MMS application, an email application, a health care application or an environment information application) of the electronic device 101 to the external electronic device (e.g., the external electronic device 104). Additionally or alternatively, the notification relay application may receive notification information from, for example, the external electronic device 104 and provide the received notification information to the user. The device management application may manage (e.g., install, remove, or update) at least a part of functions (e.g., turning on/off the external electronic device 104 (or some components of the external electronic device) or controlling a brightness of the display) of the external electronic device 104 communicating with the electronic device 101, an application executed in the external electronic device 104, or a service (e.g., call service or message service) provided by the external electronic device 104.

According to various embodiments of the present disclosure, the application 134 may include an application designated according to an attribute (e.g., type of electronic device) of the external electronic device 104. For example, when the external electronic device 104 is an MP3 player, the application 134 may include an application related to music reproduction. Similarly, when the external electronic device 104 is a mobile medical device, the application 134 may include an application related to health care. According to an embodiment of the present disclosure, the application 134 may include at least one of an application designated to the electronic device 101 and an application received from an external electronic device (e.g., a server 106 or the external electronic device 104).

The input/output interface 140 transmits a command or data input from the user through an input/output device (e.g., a sensor, a keyboard, or a touch screen) to the processor 120, the memory 130, the communication interface 160, or the application control module 170 through, for example, the bus 110. For example, the input/output interface 140 may provide data on a user's touch input through a touch screen to the processor 120. Further, the input/output interface 140 may output a command or data received through, for example, the bus 110, from the processor 120, the memory 130, the communication interface 160, or the application control module 170 through the input/output device (e.g., a speaker or a display). For example, the input/output interface 140 may output voice data processed through the processor 120 to the user through the speaker.

The display 150 displays various pieces of information (e.g., multimedia data, text data, and the like) to the user.

The communication interface 160 connects communication between the electronic device 101 and the external device (e.g., the external electronic device 104 or the server 106). For example, the communication interface 160 may access a network 162 through wireless or wired communication to communicate with the external device. The wireless communication includes at least one of, for example, Wireless Fidelity (WiFi), BlueTooth (BT), Near Field Communication (NFC), a GPS, and cellular communication (e.g., Long Term Evolution (LTE), LTE-Advanced (LTE-A), Code Division Multiple Access (CDMA), Wideband CDMA (WCDMA), Universal Mobile Telecommunications System (UMTS), Wireless Broadband (WiBro) or Global System for Mobile Communications (GSM)). The wired communication may include at least one of, for example, a Universal Serial Bus (USB), a High Definition Multimedia Interface (HDMI), Recommended Standard 232 (RS-232), and a Plain Old Telephone Service (POTS).

According to an embodiment of the present disclosure, the network 162 may be a telecommunications network. The telecommunications network includes at least one of a computer network, Internet, Internet of things, and a telephone network. According to an embodiment of the present disclosure, a protocol (e.g., transport layer protocol, data link layer protocol, or physical layer protocol) for communication between the electronic device 101 and the external device 104 may be supported by at least one of the application 134, the application programming interface 133, the middleware 132, the kernel 131, and the communication interface 160.

According to an embodiment of the present disclosure, the server 106 may perform at least one of the operations (or functions) implemented in the electronic device 101 to support the driving of the electronic device 101. For example, the server 106 may include a search server module 108 that may support the application control module 170 implemented in the electronic device 101. For example, the search server module 108 may include at least one element of the application control module 170 to perform at least one of the operations performed by the application control module 170 (e.g., execute at least one operation on behalf of the application control module).

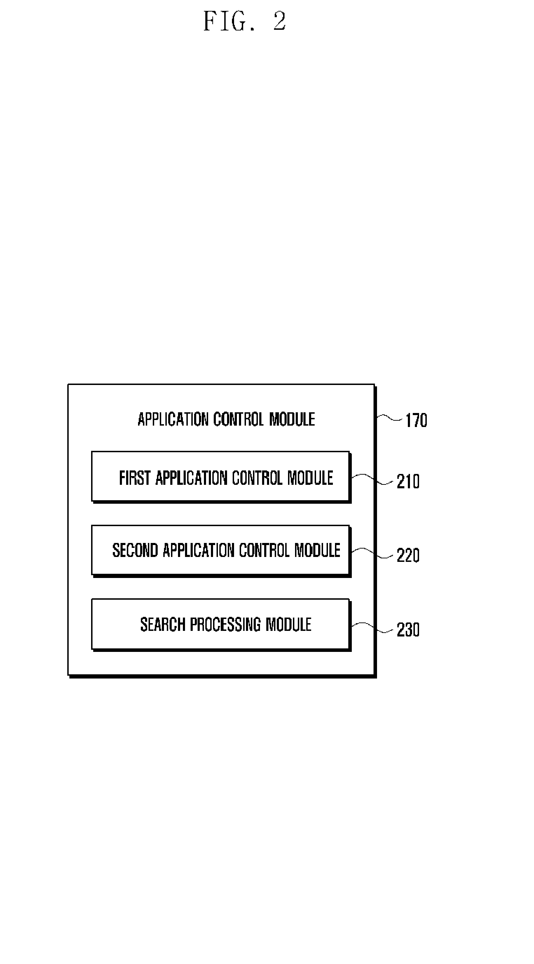

The application control module 170 may process at least a part of information acquired from the other elements (e.g., the processor 120, the memory 130, the input/output interface 140, and the communication interface 160). The application control module 170 may provide the processing result to a user through various methods. For example, the application control module 170 may execute at least one application at one time and display the the at least one application on one screen using the processor 120 or independently of the processor 120. The application control module 170 may control at least some functions of the electronic device 101 such that the electronic device 101 interworks with another electronic device (e.g., the external electronic device 104 or the server 106). According to an embodiment of the present disclosure, at least some of the functions performed by the electronic device 101 (e.g., the application control module 170) may be performed by an external device (e.g., the server 106). For example, the server 106 may include the search server module 108 corresponding to a search function in order to support the application control module 170 in performing the search function and may process at least a part of a search result display function using the search server module 108 to transmit the result to the electronic device 101 (e.g., the application control module 170). Additional information on the application control module 170 will be provided through FIGS. 2 to 9, descriptions of which will be given below.

FIG. 2 is a block diagram of an application control module of an electronic device according to various embodiments of the present disclosure.

Referring to FIG. 2, the application control module 170 may include a first application control module 210, a second application control module 220, and a search processing module 230.

The first application control module 220 may control the display 150 to display a first application screen on which a first application is executed. The first application may autonomously divide the screen thereof and display a plurality of application execution screens on the divided screens, respectively.

The second application control module 220, when receiving a request for executing a second application, executes the second application in response to the received request. The second application control module 220 may transmit, to the first application, a second application screen on which the second application is executed. According to an embodiment of the present disclosure, the first application control module 210, when receiving the request for executing the second application while the first application is executed, may control the second application control module 220 to display the second application screen included in a partial region of the first application screen. That is, the first application control module 210 may control to display the second application screen, included in the partial region of the first application screen, through the second application control module 220. The second application control module 220, when receiving the execution request from the first application control module 210, may execute the second application. The second application control module 220 may transmit the second application screen to the first application control module 210. Thereafter, the first application control module 210 may control the display 150 to display the second application screen, received from the second application control module 220, in the partial region of the first application screen. One or more second applications may be executed simultaneously or sequentially. Accordingly, one or more second application screens may be included in the first application screen.

The search processing module 230, when a search term is input to the first application screen, may display a search result list in response to the search term.

According to an embodiment of the present disclosure, the first application may be a search application. When a search term is input while the search application is executed, the search processing module 230 may control the display 150 to display a search result list. The search processing module 230 may determine whether an application stored in the electronic device exists in the search result list. When it is determined that the stored application exists in the search result list, the search processing module 230 may transmit the search result to the first application control module 210 to execute the corresponding application. The corresponding application may be the second application, and the search processing module 230 may transmit the search result to the first application control module 210. According to the search result, the first application control module 210 may or may not transmit a request for executing the second application, to the second application control module 220. More detailed contents thereof will be described below.

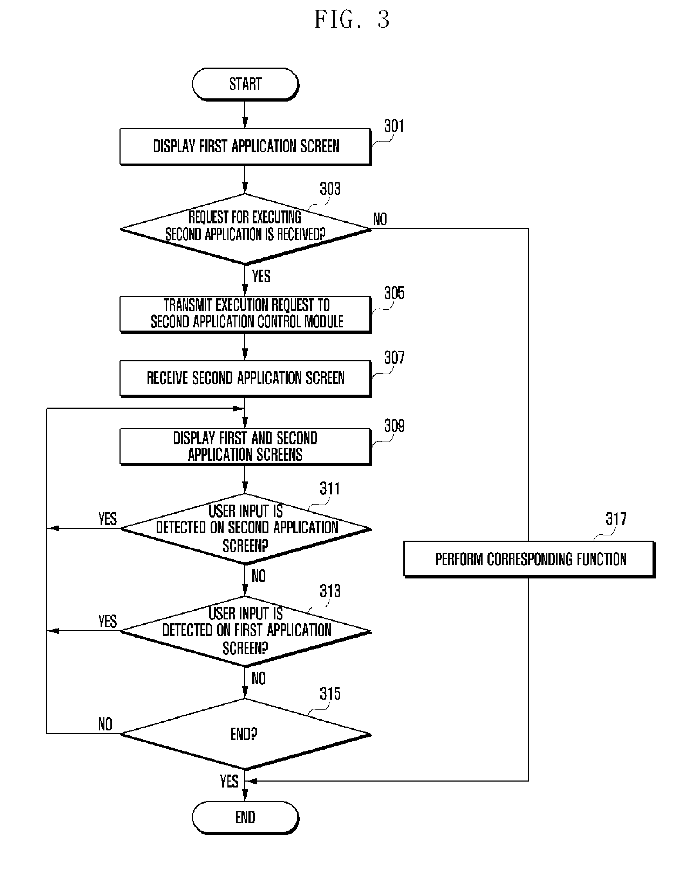

FIG. 3 is a flowchart illustrating a method of displaying a plurality of application execution screens according to various embodiments of the present disclosure.

Although it is exemplified that the processor 120 performs the following operations, the present disclosure is not limited thereto, and the application control module 170 may perform the operations based on the description of FIG. 2.

Referring to FIG. 3, in operation 301, the processor 120 may display a first application screen. In operation 303, the processor 120 determines whether a request for executing a second application is received. The request for executing the second application may be a request for executing one or more applications by a user or a request for dividing the first application screen. The processor 120, when not detecting the request for executing the second application, may control to perform a corresponding function in operation 317. For example, the processor 120 may perform a function depending upon an event that occurs in one executed application (e.g., a text message transmission application) after the application is executed. When detecting the request for executing the second application, the processor 120 may transmit the request for executing the second application to the second application control module 220 in operation 305. In this case, the processor 120 may detect the request for executing the second application while the first application screen is executed. Accordingly, the processor 120 may detect the request for executing the second application through the first application control module 210. In operation 307, in response to the request for executing the second application, the processor 120 may receive, from the second application, a second application screen that is to be included in a partial region of the first application screen. The second application screen may be a screen set as a default to display each application on the display 150 when the application is called and may be stored in the memory 130. In addition, when the second application screen is called by the user in a state of being previously executed but not terminated (e.g., in a standby state), a running screen before the calling may be displayed. Thereafter, in operation 309, the processor 120 may display the first application screen and the second application screen received from the second application control module 220.

While displaying the first and second application screens together, the processor 120 may, in operation 311, determine whether a user input is detected on the second application screen. The second application screen may be a screen configured to be included in the partial region of the first application screen and may be displayed in at least one of upper, lower, left, right, and central regions of the first application screen. In cases where the user input is detected on the second application screen, the processor 120 may return to operation 309 to display the first application screen and the second application screen on which a function corresponding to the detected user input is performed. The user input may be determined according to the user's intention to control the second application and may be a touch movement event, a touch gesture, a scroll from left to right (or from right to left), a swipe, and the like, without being limited thereto.

Meanwhile, in cases where the user input is not detected on the second application screen, the processor 120 may, in operation 313, determine whether a user input is detected on the first application screen. The user input may be received on a region other than the second application screen and may be a touch movement event, a touch gesture, a scroll from left to right (or from right to left), a swipe, and the like, without being limited thereto. For example, the user input may be a user input for moving a screen. For example, when the user input is detected on the first application screen, the processor 120 may return to operation 309 to display the first and second application screens. That is, the processor 120 may display the second application screen and the first application screen on which a function corresponding to the user input detected on the first application screen is performed. Thereafter, when a user input is not detected on the first application screen, the processor 120 may, in operation 315, determine whether to terminate the displaying of the first and second application screens. Until the displaying of the screens is terminated, the processor 120 may return to operation 309 to display the first and second application screens.

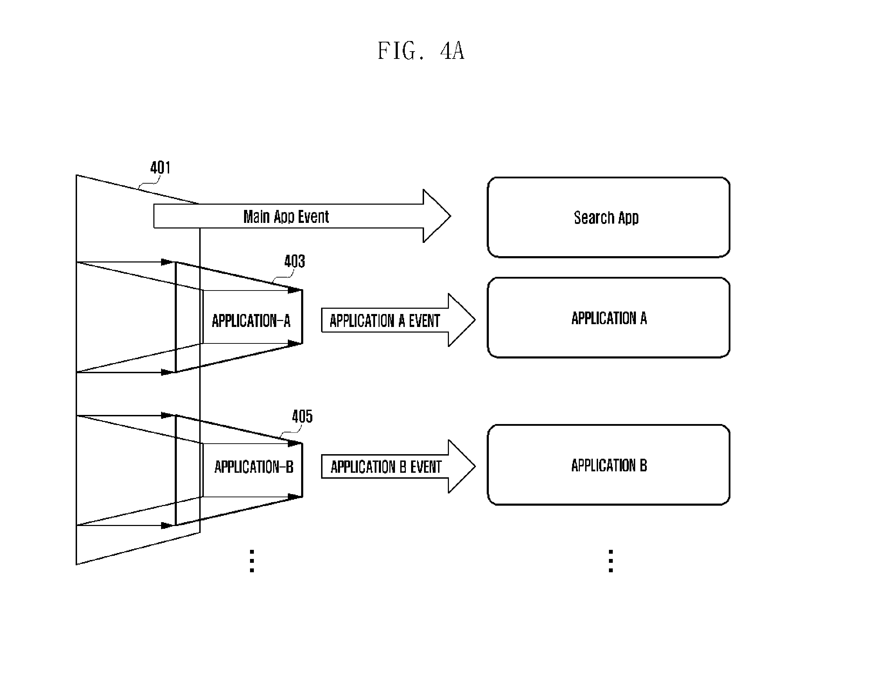

FIGS. 4A to 4C are views illustrating a plurality of application execution screens according to various embodiments of the present disclosure.

Referring to FIG. 4A, the processor 120 may display a first application screen as a first application 401 is executed. The processor 120 may detect requests for executing one or more second applications while displaying the first application screen. For example, the second applications may include application-A at operation 403 and application-B 405, and the number of second applications may be one or more and is not set. The multiple applications may be executed sequentially or simultaneously. The processor 120, when detecting the requests for executing the second applications (e.g., application-A 403 and application-B 405), may transmit the execution requests to the second applications (application-A at operation 403 and application-B 405). When receiving second application screens from application-A 403 and application-B 405, the processor 120 may display the second application screens in partial regions of the first application screen.

When user inputs are detected on the second application screens, the processor 120 may transfer the detected user inputs to the second application control module 220. The second application control module 220 may perform functions corresponding to the received user inputs. The second application control module 220 may transmit, to the first application control module 210, screens of the second applications (application-A at operation 403 and application-B 405) on which the functions corresponding to the user inputs are performed. The transmitted screens of the second applications (application-A 403 and application-B 405) may be displayed in partial regions of the first application screen. Here, the partial regions of the first application screen may be at least one of upper, lower, left, right, and central regions of the first application screen.

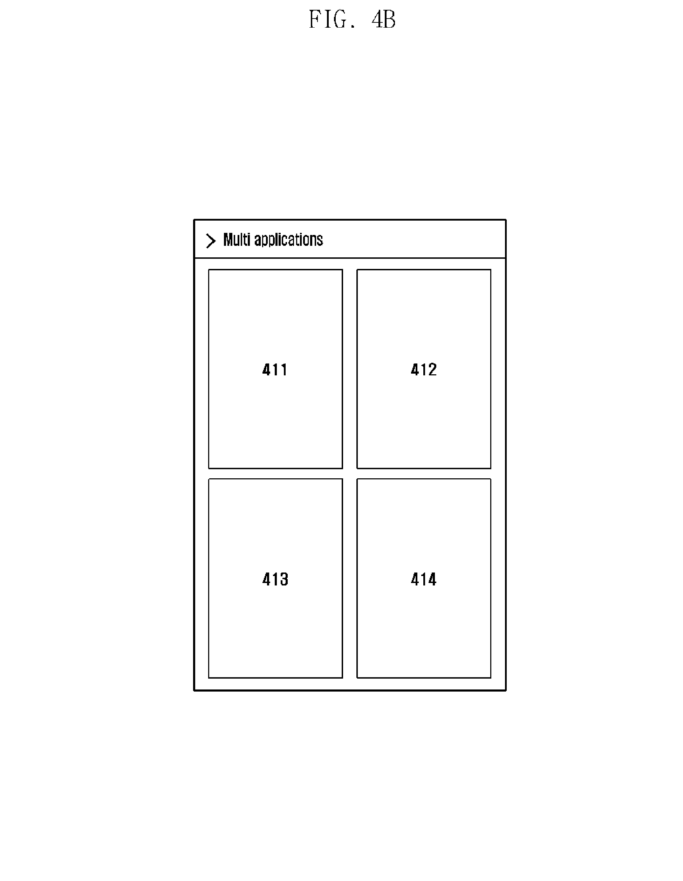

According to an embodiment of the present disclosure, the first application control module 210 may control such that an application may autonomously divide the screen thereof into two or more screens and individual applications may be executed on the divided screens. FIG. 4B illustrates an example of a screen structure in which the first application is executed.

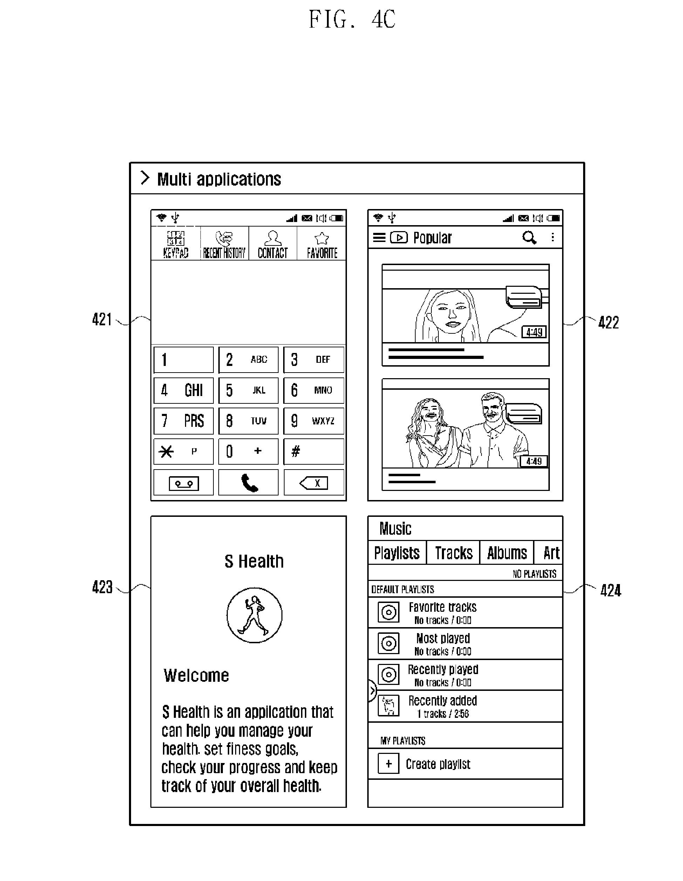

Referring to FIG. 4B, the first application control module 210 may control such that the first application (e.g., multi-application) is configured using a method of autonomously dividing a layout therein instead of a multi-window method. For example, the first application control module 210 may control such that the first application (e.g., multi-application) autonomously divides the screen thereof into four screens and therefore include four layouts 411, 412, 413, 414. The first application may include at least one layout; however, the present disclosure is not limited thereto. The processor 120 may receive a request for executing a second application while the first application (e.g., multi-application) is executed. There may be at least one second application. In response to the execution request, the processor 120 transmits the request for executing the second application to the second application control module 220. The processor 120 may receive a second application screen from the second application control module 220 and then display the first and second application screens. That is, while displaying the first application screen, the processor 120 may display the received second application screen as well. Accordingly, the processor 120 may display the first application screen together with the received second application screen. FIG. 4C is an example of a screen for displaying the first and second application screens.

Referring to FIG. 4C, the processor 120 may receive a request for executing four second applications and may accordingly display four second application execution screens in a layout of the first application (e.g., multi-application). Although it is exemplified that the number of second applications is four, the present disclosure is not limited thereto. In this way, the first application (e.g., multi-application) may display the second application screens 421, 422, 423, 424, received from the second applications, in the layouts 411, 412, 413, 414 of one application, respectively. The second applications may be executed simultaneously or sequentially. The second application screens may be inserted into the layouts of the first application. In this way, it is possible to execute a plurality of applications through more diverse methods. This is a concept contrasted with a multi-window method of dividing a screen and displaying application screens when a request for executing a second application is made while a first application is executed.

Accordingly, the second application screens 421, 422, 423, 424 illustrated in FIG. 4C may be displayed in the layouts 411, 412, 413, 414 of the first application (e.g., multi-application), respectively.

Thereafter, the processor 120 may determine whether a user input is detected on the second application screens 421, 422, 423, 424. When the determination result shows that the user input has been detected on the second application screens 421, 422, 423, 424, the processor 120 displays a screen on which a function corresponding to the user input is performed. When it is determined that a user input has not been detected, the processor 120 determines whether a user input is detected on the first application screen. When the determination result show that the user input has been detected on the first application screen, the processor 120 may display a screen on which a function corresponding to the user input is performed. When it is determined that a user input has not been detected on the first application screen, the processor 120 terminates the displaying of the screen.

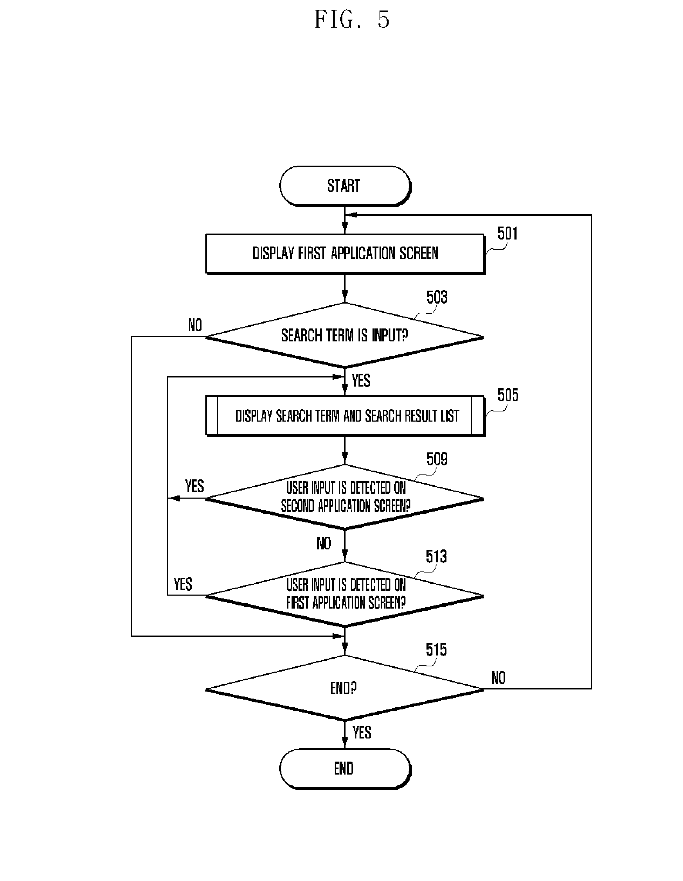

FIG. 5 is a flowchart illustrating a method of displaying a search result list according to various embodiments of the present disclosure.

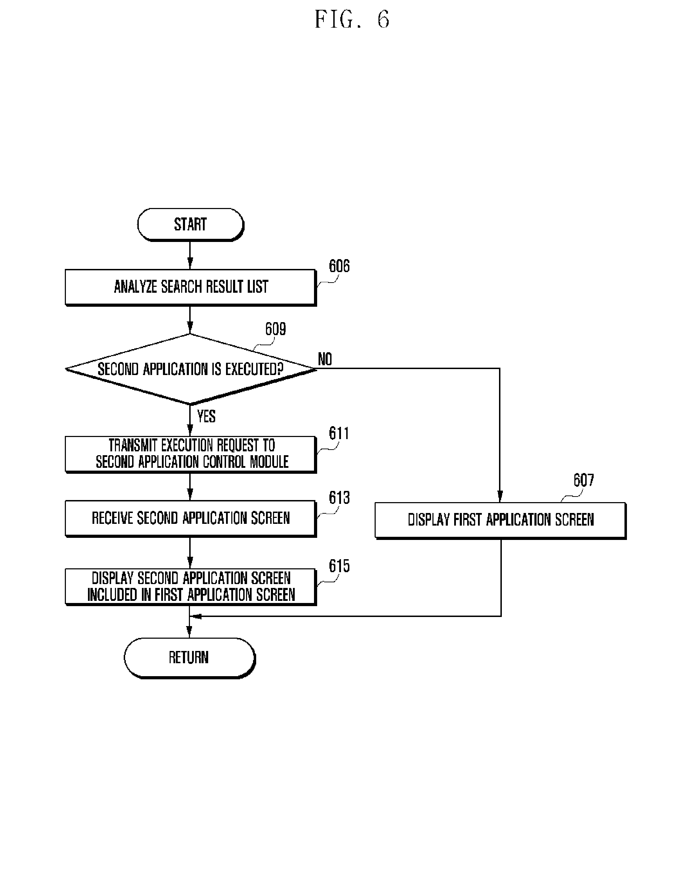

FIG. 6 is a flowchart illustrating a method of configuring a search result list according to various embodiments of the present disclosure.

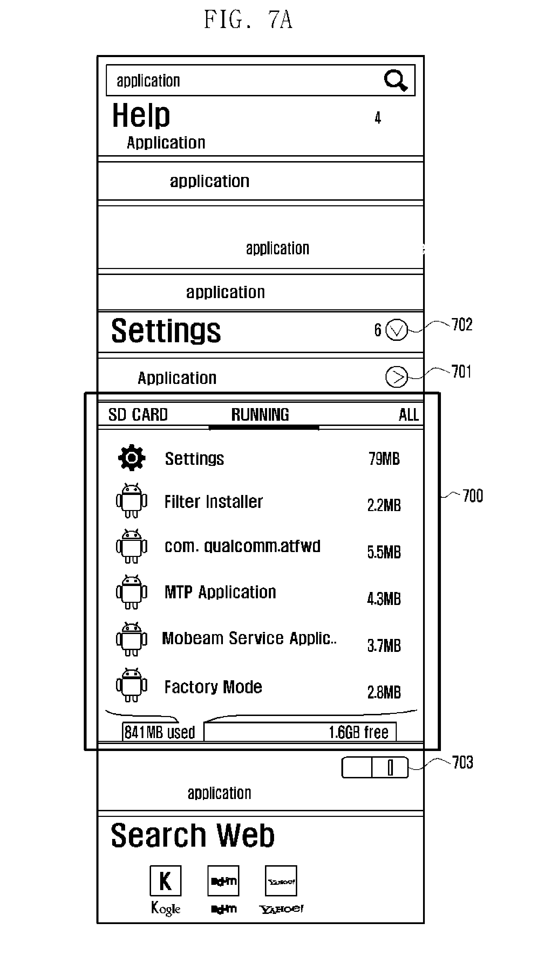

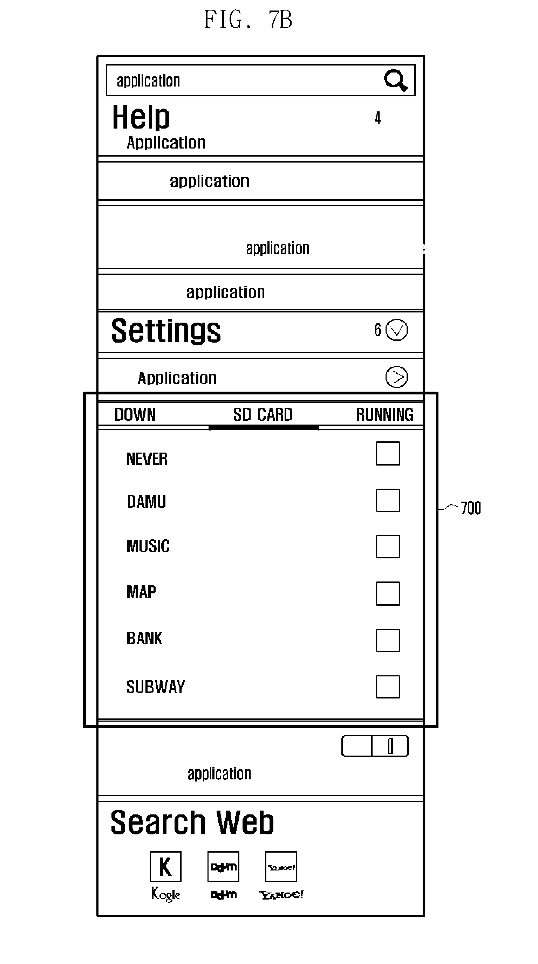

FIGS. 7A and 7B illustrate examples of displaying a search result list according to various embodiments of the present disclosure.

Referring to FIGS. 5, 6, 7A, and 7B, in operation 501, the processor 120 may display a first application screen. The first application screen may be a screen on which a search application stored in the processor 120 is executed.

In operation 503, the processor 120 determines whether a search term is input to the first application (search application) screen. When the determination result shows that the search term has been input, the processor 120 may display the search term and a search result list in operation 505. FIG. 7A illustrates an example of a search result list when a search term 'application' is input. As the search term 'application' is input, the processor 120 may display a search result list corresponding to the search term as illustrated in FIG. 7A.

The search term and the search result list may be displayed through a method illustrated in FIG. 6.

Referring to FIG. 6, the processor 120 analyzes the search result list displayed in response to the search term in operation 606. For example, the processor 120 may analyze the search result list corresponding to the search term 'application' as illustrated in FIG. 7A. In operation 609, the processor 120 may determine whether a request for executing a second application occurs. When there is an application displayed in the search result list, the request for executing the second application may occur. When the request for executing the second application is detected through the first application control module 210, the processor 120 may, in operation 611, transmit the request for executing the second application to the second application control module 220. For example, the second application may be an application 'application manager' including the search term 'application', and the processor 120 may transmit the execution request to the application 'application manager' which is the second application. The second application control module 220 may transmit, to the first application control module 210, a second application screen on which the second application is executed in response to the received execution request. The second application screen, which is a unique screen of each application, is stored in the memory 130 such that the application may be displayed on the display 150 when being called. In addition, when the second application screen is called in a state of being previously executed but not terminated, a running screen before the calling may be displayed.

In operation 613, the processor 120 may receive the second application screen 700 of FIG. 7A from the second application control module 220. In operation 615, the processor 120 may display the second application screen in a partial region of the first application screen. That is, the processor 120 may display the second application screen in a partial region of the search result list (the first application). The second application screen 700 received from the second application control module 220 is a screen on which the application 'application manager' including the search term 'application' is executed and may be a screen on which a running application is displayed. Accordingly, the processor 120, when displaying the search result list corresponding to the search term 'application', may display the second application screen 700 received from the second application control module 220 in the partial region of the search result list as illustrated in FIG. 7A.

Meanwhile, when it is determined in operation 609 that the request for executing the second application has not been detected, the processor 120 may display the search result list on the first application screen in operation 607. As illustrated in FIG. 7A, according to the search list analysis result, the processor 120 may detect that search results corresponding to the search term 'application' exist in a help tab, a setting tab, and an Internet search web tab. In more detail, if search results including the search term 'application' exist in the help tab, the processor 120 may display all the search results in the search result list. In addition, if search results including the search term 'application' exist in the setting tab, the processor 120 may display all the search results in the search result list. As illustrated in FIG. 7A, when it is assumed that six search results corresponding to the search term 'application' exist in the setting tab 702, the processor 120 may hide the search results by displaying a particular item 701. Further, the processor 120 may directly control a corresponding function by displaying a function on/off item 703 on the search result list. Furthermore, the processor 120 may display the search results corresponding to the search term 'application', which are detected in the Internet search web tab, on the first application screen. Moreover, although not illustrated in FIG. 7A, when contacts corresponding to the search term 'application' exist, the processor 120 may display the contacts.

Through the above-described operations, the processor 120 may display the search result list configured with the first and second application screens. While displaying the search result list, the processor 120 may, in operation 509, determine whether a user input is detected on the second application screen. For example, the user input may be a touch movement event, a touch gesture, a scroll from left to right (or from right to left), a swipe, and the like. According to an embodiment of the present disclosure, while the second application 'application manager' is executed on the second application screen, the processor 120 may detect a user input (e.g., a user input for displaying an application stored in a Secure Digital (SD) card). The user input may be a touch movement event, a touch gesture, a scroll from left to right (or from right to left), a swipe, and the like. The processor 120, when detecting the user input, may return to operation 505 to display the search result list. The processor 120 may display the search result list through operations 611 to 613 of FIG. 6 which has been described above.

The processor 120 may transmit the detected user input to the second application 'application manager' through the first application control module 210. The second application ('application manager') control module 220 may transmit, to the first application, the second application screen on which a function is performed according to the received user input (e.g., a screen of displaying an application stored in an SD card according to the user input). The processor 120 may display the first application screen, the second application screen 700 on which the function is performed according to the user input, and a screen displayed in response to a user input (e.g., a drag) for changing from a screen for displaying a running application to a screen for displaying an application stored in an SD card in FIG. 7B.

Thereafter, in operation 513, the processor 120 may determine whether a user input is detected on the first application screen. The user input detected on the first application screen may be a touch movement event, a touch gesture, a scroll from left to right (or from right to left), a swipe, and the like. For example, the user input may be a user input for moving the first application screen. The moving of the first application screen may be performed in order to display another non-displayed region other than the currently displayed region since a region displayed on the display 150 at one time is restrictive. When it is determined that the user input has not been detected on the first application screen, the processor 120 may, in operation 515, determine whether to terminate the displaying of the screen. Until the displaying of the screens is terminated, the processor 120 may return to operation 501 to repetitively perform the above-described operations.

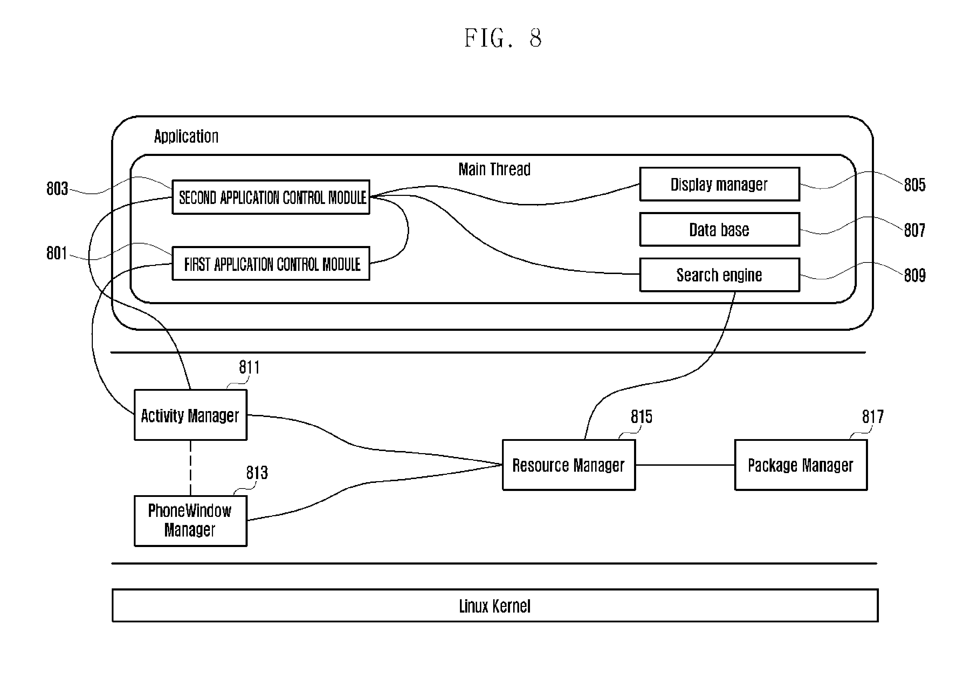

FIG. 8 is a diagram illustrating a configuration for processing an event occurring in a search result list according to various embodiments of the present disclosure.

Referring to FIG. 8, an application may be controlled by the processor 120 and may control a first application control module 801, a second application control module 803, a display manager 805 (e.g., the display 150), a database 807, and a search engine 809 (e.g., the search processing module 230 of FIG. 2) through a main thread. The main thread exists within a process of the processor 120 and may be a performance path under the control of the processor and a unit of flow executed in an application (program). In general, an application (program) has one or more threads. In the following description, it is assumed that at least one application has been executed.

In an embodiment of the present disclosure, a first application may be a search application. While the search application is executed, the processor 120 may detect input of a search term in a search window. When the search term is input, the search engine 809 may search a resource manager 815 for the input search term. The resource manager 815 may search a package including the search term through a package manager 817 and transfer the package search result to the search engine 809. According to the search result, a request for executing a second application may or may not occur. The search engine 809 may transfer, to the first application control module 803, a search result to be displayed on a first application screen in response to the received package search result. In cases where the request for executing the second application occurs, the first application control module 803 may transmit, to the second application control module 803, the request for executing the second application by executing the second application. The second application control module 803 having received the request for executing the second application may call an activity manager 811 to execute an application of a screen to be displayed on a second application screen. The activity manager 811 having received the call of the application to be displayed on the second application screen may transfer the application call to a phone window manager 813. The phone window manager 813 having received the application call may request screen data (resources) from the resource manager 815 in order to configure second application screen data (resources). The screen data (resources) which will be configured as the second application screen may be displayed in a partial region of the search result list. The resource manager 815 may configure the screen data to be displayed on the second application screen, in response to a screen data request received from the phone window manager 813. The resource manager 815 may transfer, to the activity manager 811, the screen data configured to be displayed on the second application screen. The activity manager 811 may transmit, to the first application control module 801, the second application screen configured according to the received screen data. The first application control module 801 may display the received application screen through the display manager 805.

In another embodiment of the present disclosure, the processor 120 may detect a request for executing a second application while a first application is executed. At this time, the processor 120 may display the first application screen through the first application control module 801. The processor 120, when detecting the request for executing the second application, may allow the first application control module 801 to control the second application control module 803. In order to display a screen to be displayed on a second application screen, the processor 120 may transmit a screen display request to the second application control module 803 to execute the corresponding application. The second application control module 803 may call the activity manager 811 to execute an application to be displayed on the second application screen. The activity manager 811 may transfer, to the phone window manager 813, the application call to display the application on the second application screen. As the second application is executed, the phone window manager 813 may request screen data (resources) from the resource manager 815 in order to configure the screen data (resources) to be displayed on the second application screen. The resource manager 815 configures the screen data (resources) to be displayed on the second application screen to transfer the the second application screen to the activity manager 811, and then, the activity manager 811 transmits the received screen data (resources) to the first application screen control module 801. The first application screen control module 801 may control the display manager 805 to display the received screen data (resources) on the second application screen. The second application screen may be displayed in a partial region of the first application screen.

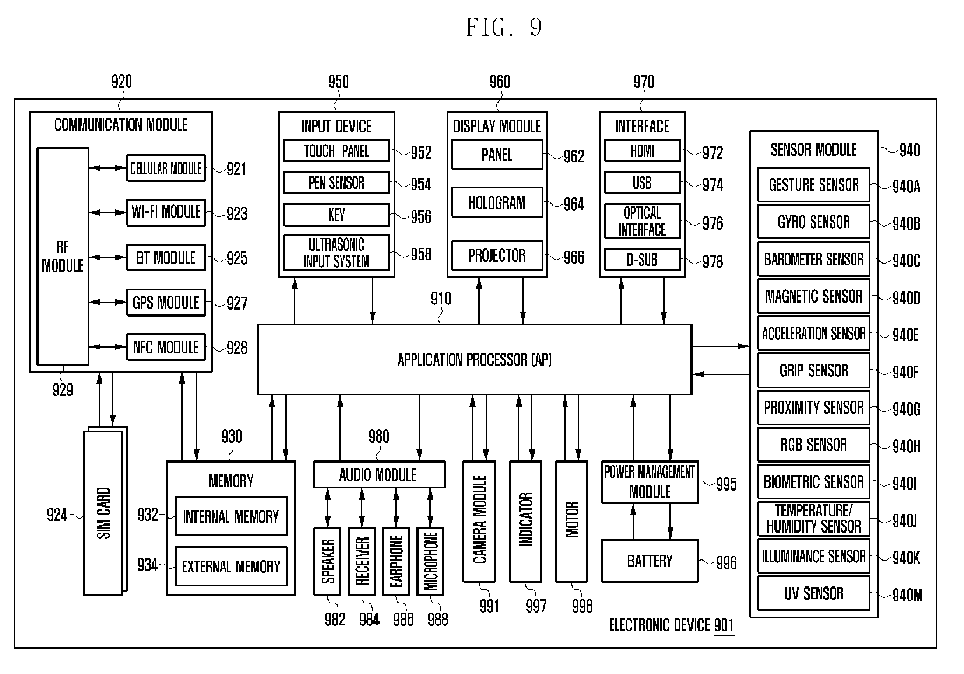

FIG. 9 is a block diagram of an electronic device according to various embodiments of the present disclosure.

Referring to FIG. 9, an electronic device 901 may configure, for example, a whole or a part of the electronic device 101 illustrated in FIG. 1.

The electronic device 901 includes one or more Application Processors (APs) 910, a communication module 920, a Subscriber Identification Module (SIM) card 924, a memory 930, a sensor module 940, an input device 950, a display 960, an interface 970, an audio module 980, a camera module 991, a power managing module 995, a battery 996, an indicator 997, and a motor 998.

The AP 910 operates an operating system (OS) or an application program so as to control a plurality of hardware or software component elements connected to the AP 910 and execute various data processing and calculations including multimedia data. The AP 910 may be implemented by, for example, a System on Chip (SoC). According to an embodiment of the present disclosure, the processor 910 may further include a Graphic Processing Unit (GPU). The processor 910 may further include the application control module 170.

The communication module 920 (e.g., communication interface 160) transmits/receives data in communication between different electronic devices (e.g., the external electronic device 104 and the server 106) connected to the electronic device 901 (e.g., electronic device 101) through a network. According to an embodiment of the present disclosure, the communication module 920 includes a cellular module 921, a WiFi module 923, a BT module 925, a GPS module 927, a NFC module 928, and a Radio Frequency (RF) module 929.

The cellular module 921 provides a voice call, a video call, a SMS, or an Internet service through a communication network (e.g., LTE, LTE-A, CDMA, WCDMA, UMTS, WiBro, GSM and the like). Further, the cellular module 921 may distinguish and authenticate electronic devices within a communication network by using a SIM (e.g., the SIM card 924). According to an embodiment of the present disclosure, the cellular module 921 performs at least some of the functions, which may be provided by the AP 910. For example, the cellular module 921 may perform at least some of the multimedia control functions.

According to an embodiment of the present disclosure, the cellular module 921 may include a Communication Processor (CP). Further, the cellular module 921 may be implemented by, for example, an SoC. Although the components such as the cellular module 921 (e.g., communication processor), the memory 930, and the power managing module 995 are illustrated as components separate from the AP 910 in FIG. 8, the AP 910 may include at least some (e.g., cellular module 921) of the aforementioned components in an embodiment.

According to an embodiment of the present disclosure, the AP 910 or the cellular module 921 (e.g., communication processor) may load a command or data received from at least one of a non-volatile memory and other components connected to each of the AP 910 and the cellular module 921 to a volatile memory and process the loaded command or data. Further, the AP 910 or the cellular module 921 may store data received from at least one of other components or generated by at least one of other components in a non-volatile memory.

Each of the WiFi module 923, the BT module 925, the GPS module 927, and the NFC module 928 may include, for example, a processor for processing data transmitted/received through the corresponding module. Although the cellular module 921, the WiFi module 923, the BT module 925, the GPS module 927, and the NFC module 928 are illustrated as blocks separate from each other in FIG. 8, at least some (e.g., two or more) of the cellular module 921, the WiFi module 923, the BT module 925, the GPS module 927, and the NFC module 928 may be included in one Integrated Chip (IC) or one IC package according to an embodiment of the present disclosure. For example, at least some (e.g., the communication processor corresponding to the cellular module 921 and the WiFi processor corresponding to the WiFi module 923) of the processors corresponding to the cellular module 921, the WiFi module 923, the BT module 925, the GPS module 927, and the NFC module 928 may be implemented by one SoC.

The RF module 929 transmits/receives data, for example, an RF signal. Although not illustrated, the RF module 929 may include, for example, a transceiver, a Power Amp Module (PAM), a frequency filter, a Low Noise Amplifier (LNA) and the like. Further, the RF module 929 may further include a component for transmitting/receiving electronic waves over a free air space in wireless communication, for example, a conductor, a conducting wire, and the like. Although the cellular module 921, the WiFi module 923, the BT module 925, the GPS module 927, and the NFC module 928 share one RF module 929 in FIG. 9, at least one of the cellular module 921, the WiFi module 923, the BT module 925, the GPS module 927, and the NFC module 928 may transmit/receive an RF signal through a separate RF module according to an embodiment.

The SIM card 924 is a card including a SIM and may be inserted into a slot formed in a particular portion of the electronic device. The SIM card 924 includes unique identification information (e.g., Integrated Circuit Card IDentifier (ICCID)) or subscriber information (e.g., International Mobile Subscriber Identity (IMSI).

The memory 930 (e.g., memory 130) may include an internal memory 932 or an external memory 934. The internal memory 932 may include, for example, at least one of a volatile memory (e.g., a Random Access Memory (RAM), a dynamic RAM (DRAM), a static RAM (SRAM), a synchronous dynamic RAM (SDRAM), and the like), and a non-volatile Memory (e.g., a Read Only Memory (ROM), a one-time programmable ROM (OTPROM), a programmable ROM (PROM), an erasable and programmable ROM (EPROM), an electrically erasable and programmable ROM (EEPROM), a mask ROM, a flash ROM, a Not AND (NAND) flash memory, a Not OR (NOR) flash memory, and the like).

According to an embodiment of the present disclosure, the internal memory 232 may be a Solid State Drive (SSD). The external memory 934 may further include a flash drive, for example, a Compact Flash (CF), an SD, a Micro-SD, a Mini-SD, an extreme Digital (xD), or a memory stick. The external memory 934 may be functionally connected to the electronic device 901 through various interfaces. According to an embodiment of the present disclosure, the electronic device 901 may further include a storage device (or storage medium) such as a hard drive.

The sensor module 940 measures a physical quantity or detects an operation state of the electronic device 901, and converts the measured or detected information to an electronic signal. The sensor module 940 may include, for example, at least one of a gesture sensor 940A, a gyro sensor 940B, an atmospheric pressure (barometric) sensor 940C, a magnetic sensor 940D, an acceleration sensor 940E, a grip sensor 940F, a proximity sensor 940G, a color sensor 940H (e.g., Red, Green, and Blue (RGB) sensor) 940H, a biometric sensor 940I, a temperature/humidity sensor 940J, an illumination (light) sensor 940K, and a Ultra Violet (UV) sensor 940M. Additionally or alternatively, the sensor module 940 may include, for example, a E-nose sensor, an electromyography (EMG) sensor, an electroencephalogram (EEG) sensor, an electrocardiogram (ECG) sensor, an Infrared (IR) sensor, an iris sensor, a fingerprint sensor (not illustrated), and the like. The sensor module 940 may further include a control circuit for controlling one or more sensors included in the sensor module 940.

The input device 950 includes a touch panel 952, a (digital) pen sensor 954, a key 956, and an ultrasonic input device 958. For example, the touch panel 952 may recognize a touch input in at least one type of a capacitive type, a resistive type, an infrared type, and an acoustic wave type. The touch panel 952 may further include a control circuit. In the capacitive type, the touch panel 952 may recognize proximity as well as a direct touch. The touch panel 952 may further include a tactile layer. In this event, the touch panel 952 provides a tactile reaction to the user.

The (digital) pen sensor 954 may be implemented, for example, using a method identical or similar to a method of receiving a touch input of the user, or using a separate recognition sheet. The key 956 may include, for example, a physical button, an optical key, or a key pad. The ultrasonic input device 958 is a device which may detect an acoustic wave by a microphone (e.g., a microphone 988) of the electronic device 901 through an input means generating an ultrasonic signal to identify data and may perform wireless recognition. According to an embodiment of the present disclosure, the electronic device 901 receives a user input from an external device (e.g., computer or server) connected to the electronic device 901 by using the communication module 920.

The display 960 (e.g., display 150) includes a panel 962, a hologram device 964, and a projector 966. The panel 962 may be, for example, a Liquid Crystal Display (LCD) or an Active Matrix Organic Light Emitting Diode (AM-OLED). The panel 962 may be implemented to be, for example, flexible, transparent, or wearable. The panel 962 may be configured by the touch panel 952 and one module. The hologram device 964 shows a stereoscopic image in the air by using interference of light. The projector 966 projects light on a screen to display an image. For example, the screen may be located inside or outside the electronic device 901. According to an embodiment of the present disclosure, the display 960 may further include a control circuit for controlling the panel 962, the hologram device 964, and the projector 966.

The interface 970 includes, for example, a HDMI 972, a USB 974, an optical interface 976, and a D-subminiature (D-sub) 978. The interface 970 may be included in, for example, the communication interface 160 illustrated in FIG. 1. Additionally or alternatively, the interface 990 may include, for example, a Mobile High-definition Link (MHL) interface, an SD card/Multi-Media Card (MMC), or an Infrared Data Association (IrDA) standard interface.

The audio module 980 bi-directionally converts a sound and an electronic signal. At least some components of the audio module 980 may be included in, for example, the input/output interface 140 illustrated in FIG. 1. The audio module 980 processes sound information input or output through, for example, a speaker 982, a receiver 984, an earphone 986, the microphone 988 and the like.

The camera module 991 is a device which may photograph a still image and a video. According to an embodiment of the present disclosure, the camera module 991 may include one or more image sensors (e.g., a front sensor or a back sensor), an Image Signal Processor (ISP) (not shown) or a flash (e.g., an LED or xenon lamp).

The power managing module 995 manages power of the electronic device 901. Although not illustrated, the power managing module 995 may include, for example, a Power Management Integrated Circuit (PMIC), a charger IC, or a battery or fuel gauge.

The PMIC may be mounted to, for example, an integrated circuit or an SoC semiconductor. A charging method may be divided into wired and wireless methods. The charger IC charges a battery and prevent over voltage or over current from flowing from a charger. According to an embodiment of the present disclosure, the charger IC includes a charger IC for at least one of the wired charging method and the wireless charging method. The wireless charging method may include, for example, a magnetic resonance method, a magnetic induction method and an electromagnetic wave method, and additional circuits for wireless charging, for example, circuits such as a coil loop, a resonant circuit, a rectifier and the like may be added.

The battery fuel gauge measures, for example, a remaining quantity of the battery 996, or a voltage, a current, or a temperature during charging. The battery 996 may store or generate electricity and supply power to the electronic device 901 by using the stored or generated electricity. The battery 996 may include a rechargeable battery or a solar battery.

The indicator 997 shows particular statuses of the electronic device 901 or a part (e.g., AP 910) of the electronic device 901, for example, a booting status, a message status, a charging status and the like. The motor 998 converts an electrical signal to a mechanical vibration. Although not illustrated, the electronic device 901 may include a processing unit (e.g., GPU) for supporting a module TV. The processing unit for supporting the mobile TV may process, for example, media data according to a standard of Digital Multimedia Broadcasting (DMB), Digital Video Broadcasting (DVB), media flow and the like.

Each of the components of the electronic device according to various embodiments of the present disclosure may be implemented by one or more components and the name of the corresponding component may vary depending on a type of the electronic device. The electronic device according to various embodiments of the present disclosure may include at least one of the above described components, a few of the components may be omitted, or additional components may be further included. Also, some of the components of the electronic device according to various embodiments of the present disclosure may be combined to form a single entity, and thus may equivalently execute functions of the corresponding components before being combined.

The term "module" used in the present disclosure may refer to, for example, a unit including at least one combination of hardware, software, and firmware. The "module" may be interchangeably used with a term, such as unit, logic, logical block, component, and/or circuit. The "module" may be a minimum unit of an integrally configured article and/or a part thereof. The "module" may be a minimum unit performing at least one function and/or a part thereof. The "module" may be mechanically and/or electronically implemented. For example, the "module" according to the present disclosure may include at least one of an Application-Specific ICt (ASIC) chip, a Field-Programmable Gate Arrays (FPGA), and a programmable-logic device for performing operations which has been known and/or are to be developed hereinafter.

According to various embodiments of the present disclosure, at least some of the devices (e.g., modules or functions thereof) or the method (e.g., operations) according to the present disclosure may be implemented by a command stored in a computer-readable storage medium in a programming module form. When the instructions are executed by at least one processor (e.g., the processor 910), the at least one processor may perform functions corresponding to the instructions. The computer-readable storage medium may be, for example, the memory 930. At least a part of the programming module may be implemented (e.g., executed) by, for example, the processor 910. At least some of the programming modules may include, for example, a module, a program, a routine, a set of instructions or a process for performing one or more functions.

The computer-readable recording medium may include magnetic media such as a hard disk, a floppy disk, and a magnetic tape, optical media such as a Compact Disc ROM (CD-ROM) and a DVD, magneto-optical media such as a floptical disk, and hardware devices specially configured to store and perform a program instruction (e.g., programming module), such as a ROM, a RAM, a flash memory and the like. In addition, the program instructions may include high class language codes, which may be executed in a computer by using an interpreter, as well as machine codes made by a compiler. The aforementioned hardware device may be configured to operate as one or more software modules in order to perform the operation of the present disclosure, and vice versa.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method of displaying an application screen in an electronic device, the method comprising:
displaying a first application screen;
transmitting a request for executing a second application to a second application control module through a first application control module when detecting the request for executing the second application;
receiving a second application screen from the second application control module;
reconfiguring the received second application screen to display the received second application screen together with the first application screen; and
displaying the reconfigured first application screen and second application screen.

2. The method of claim 1, further comprising:
determining whether a user input is detected on the second application screen; and
receiving, from the second application control module, a screen on which a function corresponding to the user input is performed and displaying the screen when the user input is detected on the second application screen.

3. The method of claim 2, wherein the receiving and displaying of the screen on which the function corresponding to the user input is performed comprises:
receiving the second application screen on which the function corresponding to the user input is performed, through the first application control module from the second application control module; and
reconfiguring the received second application screen and displaying the reconfigured second application screen in a partial region of the first application screen.

4. The method of claim 2, further comprising:
detecting a user input on the first application screen; and
performing a function corresponding to the user input through the first application control module.

5. The method of claim 1, wherein the reconfiguring of the received second application screen comprises:
resizing the second application screen; and
displaying the resized second application screen on the second application screen included in a partial region of the first application screen.

6. The method of claim 1, wherein the displaying of the reconfigured first and second application screens comprises:
reconfiguring the second application screen to display the second application screen in at least one of upper, lower, left, right, and central regions of the first application screen;
displaying the second application screen within the first application screen through the first application control module.

7. A method of displaying an application screen in an electronic device, the method comprising:
displaying a first application screen; and
displaying a search result list corresponding to a search term when input of the search term is detected on the first application screen,
wherein the displaying of the search result list corresponding to the search term comprises:
transmitting a request for executing a second application to a second application control module through a first application control module when the execution request occurs while the search result list is displayed;
receiving a second application screen from the second application; and
reconfiguring the search result list such that the received second application screen is displayed together with the first application screen; and
displaying the reconfigured first application screen and second application screen.

8. The method of claim 7, further comprising:
determining whether a user input occurs on the second application screen; and
transmitting the occurred user input to the second application control module, receiving, from the second application control module, a screen on which a function corresponding to the user input is performed; and
displaying the screen when the occurrence of the user input is detected on the second application screen.

9. The method of claim 7, wherein the displaying of the reconfigured first and second application screens comprises:
displaying the second application screen within the first application screen through the first application control module.

10. A device for displaying an application screen in an electronic device, the device comprising:
a display configured to display a first application screen and a second application screen; and
a processor configured:
to control to transmit a request for executing a second application to a second application control module through a first application control module when the request for executing the second application is detected on the first application screen, and
to control to display the first and second application screens when receiving the second application screen in response to the execution request.

11. The device of claim 10, wherein the processor, when detecting a user input on the second application screen, is further configured to control to display a screen on which a function corresponding to the user input is performed, in a partial region of the first application screen, the screen being received from the second application control module.

12. The device of claim 11, wherein the processor is further configured:
to control to receive the second application screen on which the function corresponding to the user input is performed, through the first application control module from the second application control module, and
to control to display the received second application screen in a partial region of the first application screen.

13. The device of claim 10, wherein the processor, when detecting a user input on the first application screen, is further configured to:
control the first application control module to display a screen on which a function corresponding to the user input is performed,
control to resize the second application screen and to display the resized second application screen in a partial region of the first application screen,
control the first application control module to display the second application screen within the first application screen.

14. The device of claim 10, wherein the processor is further configured to control to reconfigure the second application screen to display the second application screen in at least one of upper, lower, left, right, and central regions of the first application screen.

15. The device of claim 10, wherein the processor is further configured:
to control to display a search result list corresponding to a search term when the search term is detected on the first application screen,
to control to transmit a request for executing the second application to the second application control module when the execution request occurs in the search result list,
to reconfigure the second application screen received from the second application control module, and
to control to display the first and second application screens.
